# EUROPÄISCHE PATENTSCHRIFT

(11) **EP 1 878 597 B1**
(45) Veröffentlichungstag und Bekanntmachung des Hinweises auf die Patenterteilung: **22.07.2009**
(21) Anmeldenummer: 07007572.6
(22) Anmeldetag: 13.04.2007
(51) Int. Cl.: B60G 7/00

(54) **Lenkeranordnung**
Suspension arm arrangement
Arrangement de bras de suspension

(30) Priorität: 12.07.2006 DE 102006032508
(43) Veröffentlichungstag der Anmeldung: 16.01.2008
(73) Patentinhaber: Benteler Automobiltechnik GmbH, 33104 Paderborn (DE)
(72) Erfinder: Koczar, Peter, 65205 Wiesbaden (DE)
(74) Vertreter: Griepenstroh, Jörg

(56) Entgegenhaltungen:
- EP-A- 0 739 763
- DE-A1- 10 255 813
- DE-C1- 3 843 820
- GB-A- 2 205 074
- JP-A- 9 236 113
- JP-A- 9 254 621
- JP-A- 2000 071 730
- US-A- 4 887 486
- US-A- 6 030 570
- US-A1- 2005 258 613

## Beschreibung

Die Erfindung betrifft eine Lenkeranordnung mit einem aus einer Oberschale und aus einer Unterschale zusammengesetzten Lenker, welcher in seinen Endbereichen jeweils einen Durchzug zur Aufnahme eines Gummi-Metall-Lagers aufweist. Derartige Lenker sind in unterschiedlichen Ausführungsformen bekannt. Die Lageraufnahmen werden entweder im Durchzugverfahren hergestellt oder es werden aus Rohrabschnitten gebildete Lageraufnahmen an die Enden des Lenkers angeschweißt. GB-A-2 205 074, zum Beispiel, zeigt eine Lenkeranordnung nach dem Oberbegriff des Anspruchs 1.

Ein konventioneller Fahrwerkslenker hat die Funktion, das Rad kinematisch zu fixieren und hat wesentlichen Einfluss auf die Lenkeigenschaften. Fahrwerkslenker mit separat anzuschweißenden Rohrabschnitten, in welche die Gummi-Metall-Lager eingepresst werden, setzen eine Reihe von Fertigungsschritten und zusätzlichen Bauteilen voraus, so dass der Aufwand für derartige Lageraufnahmen relativ hoch ist. Ein weiterer Nachteil ist, dass Gummi-Metall-Lager theoretisch aus der Aufnahme herausgleiten können. Unter Umständen werden auch vorgeschriebene Auspresskräfte für die Gummi-Metall-Lager nicht immer erreicht. Bei der Montage von Gummi-Metall-Lagern können Probleme auftreten, die auf unzureichende Passungen zurückzuführen sind.

Hiervon ausgehend, liegt der Erfindung die Aufgabe zu Grunde, eine Lenkeranordnung aufzuzeigen, bei welcher die Lageraufnahme für ein Gummi-Metall-Lager kostengünstig hergestellt ist und bei welcher zugleich sichergestellt werden kann, dass ein Auswandern der Lager unter Belastung nicht auftritt.

Diese Aufgabe ist bei einer Lenkeranordnung mit den Merkmalen des Patentanspruchs 1 gelöst.

Vorteilhafte Weiterbildungen des Erfindungsgedankens ergeben sich aus den Unteransprüchen.

Bei der erfindungsgemäßen Lenkeranordnung ist vorgesehen, dass die Oberschale und die Unterschale im Bereich der Durchzüge in entgegengesetzte Richtungen konisch ausgestellt sind. Auf diese Weise entsteht ein doppelkonisch gestalteter Ringraum, in welchem eine Lageraußenschale mit ebenso doppelkonischer Außenkontur unverlierbar gehalten ist. Im Unterschied zu Gummi-Metall-Lagern mit zylindrischer Lageraußenschale ist es bei der erfindungsgemäßen Bauform nicht möglich, dass das Gummi-Metall-Lager unter Last auswandert. Das Gummi-Metall-Lager kann unmittelbar während der Montage durch das Zusammenpressen der Ober- und Unterschale vorgespannt werden, so dass sich die Montage des Gummi-Metall-Lagers in den Herstellungs-Prozess des Lenkers einbinden lässt. Die Oberschale und die Unterschale sind beispielsweise formschlüssig miteinander verbunden. Insbesondere sind die Ober- und die Unterschale miteinander stoffschlüssig verbunden, insbesondere verschweißt. Durch die feste Verbindung zwischen Ober- und Unterschale ist das Gummi-Metall-Lager unverlierbarer Bestandteil der Lenkeranordnung geworden und durch die Anpassung der Außenkontur der Lageraußenschale an den doppelkonisch gestalteten Ringraum sicher lagefixiert. Wenn die Lageraußenschale zudem ein gewisses Übermaß gegenüber dem Ringraum aufweist, wird das Gummi-Metall-Lager entsprechend dem Übermaß vorgespannt, so dass die Lageraußenschale weder in Axialrichtung noch in Radialrichtung wandern kann.

Bei der erfindungsgemäßen Bauform wird berücksichtigt, dass ein Lenker für ein Kraftfahrzeug hinsichtlich seiner Haltbarkeit auch auf die Laufleistung oder Lebensdauer eines PKW abgestimmt ist. Da es sich bei Lenkern in Blechschalenbauweise um relativ kostengünstige Bauteile handelt, ist es im Rahmen der Erfindung vorgesehen, die Gummi-Metall-Lager zusammen mit dem Lenker auszutauschen. Durch die erfindungsgemäße Lenkeranordnung entfallen daher Probleme, die bei der nachträglichen Montage des Gummi-Metall-Lagers mit den Lenkern auftraten. Passungen, wie sie bei hülsenförmigen Lageraußenschalen erforderlich sind, müssen bei der erfindungsgemäßen Ausführung der Lageraufnahme nicht gehalten werden, so dass auch vorgeschriebene Auspresskräfte in diesem Zusammenhang unkritisch sind. In Kombination mit der kostengünstigen Herstellbarkeit stellt die erfindungsgemäße Lenkeranordnung in Schalenbauweise mit vorgespannten Gummi-Metall-Lagern eine ausgesprochen kostengünstige und zugleich betriebssichere Variante eines Lenkers dar.

Es wird als zweckmäßig angesehen, wenn der zwischen der Längslenkerachse und den Ausstellungen im Bereich der Durchzüge gemessene Konuswinkel der Ober- und Unterschale in einem Bereich von 30°- 60° liegt. Als besonders vorteilhaft wird ein Bereich von 45°+/- 5° angesehen. Der Konuswinkel der Ober- und Unterschale entspricht vorzugsweise dem Konuswinkel der doppelkonischen Außenkontur der Lageraußenschale, so dass die Ausstellungen der Durchzüge flächig an der Lageraußenschale anliegen. Dadurch wird das gesamte Gummi-Metall-Lager optimal abgestützt. Eine Vorspannung des Gummi-Metall-Lagers ergibt sich aus der Nachgiebigkeit der Ober- und Unterschale im Bereich der Durchzüge.

Es wird als besonders vorteilhaft angesehen, wenn eine Elastomerfeder mit dem Lagerinnenteil fest haftend verbunden ist, wobei die Lageraußenschale im axialen Längsschnitt eine gewellte Innenkontur mit einem radial nach innen weisenden Mittelsteg und mit einem radial nach innen weisenden Randsteg aufweist. Das Elastomerbauteil weist zudem zwei im Abstand zueinander verlaufende Ringwülste auf, welche in der Einbaulage unter radialer Vorspannung durch die Lageraußenschale zwischen dem Mittelsteg und die Randstege greifen, wobei der Mittelsteg die Ringwülste in der Einbaulage in Axialrichtung auseinander drängt. Das Wesentliche bei dieser geometrischen Gestaltung ist die Abstimmung der Konturen der Lageraußenschale auf die Kontur der Elastomerfeder. Die Elastomerfeder wird von der Lageraußenschale zusammengepresst, wobei durch die Interferenz der Außenkonturen der Elastomerfeder mit der Innenkontur der Lageraußenschale eine Lagerfunktion realisiert wird, die hohe radiale Steifigkeit mit einer ausgeprägten und abstimmbaren Radialfunktion ermöglicht. Diese wird durch Druckkammerung der Ringwülste innerhalb der konturierten Lageraußenschalen realisiert. Bei der erfindungsgemäßen Konfiguration ergibt sich eine hohe Radialsteifigkeit bei gleichzeitig niedriger Torsionssteifigkeit und zugleich niedriger Kardaniksteifigkeit. Durch die Druckkammerung der Elastomerfeder innerhalb der Lageraußenschale ergibt sich insgesamt eine hohe Lebensdauer bei gleichzeitig kostengünstigem Herstellungsverfahren.

Die axiale Kennung dieses Gummi-Metall-Lagers wird wesentlich dadurch bestimmt, dass der Mittelsteg die Ringwülste in der Einbaulage in Axialrichtung auseinander drängt. Es bedeutet, dass der Mittelsteg eine Geometrie aufweist, die im unmontierten Zustand des Gummi-Metall-Lagers nicht deckungsgleich mit der Kontur der Elastomerfeder ist. Vielmehr ist vorgesehen, dass die Ringwülste gewissermaßen enger nebeneinander liegen als die tiefsten Punkte zwischen dem Mittelsteg und den Randstegen. Mit anderen Worten ist der Mittelsteg breiter als die Nut zwischen den Ringwülsten, so dass dieser allein durch die unterschiedlichen Breitenverhältnisse bzw. Abstände auseinander gedrängt werden. Durch das Verdrängen der Ringwülste in entgegengesetzte Richtungen wird der Mittelsteg gewissermaßen zwischen den Ringwülsten eingeklemmt, so dass die Lageraußenschale gegenüber den Lagerinnenteilen in Axialrichtung sowie in Radialrichtung vorgespannt ist. Die Ringwülste stützen sich aber vorzugsweise nicht nur an den Mittelsteg, sondern auch an den Randstegen ab. Die Randstege dienen daher gewissermaßen als äußerer Anschlag für die Elastomerfeder bei axialer Belastung. Wichtig ist, dass zwischen den Randstegen und dem Mittelsteg zwei nutförmige Druckkammern gebildet sind, die jeweils einen gerundeten Nutgrund aufweisen, sowie gerundete Übergänge zu dem Mittelsteg bzw. zu den Randstegen, so dass sich die Ringwülste formschlüssig und möglichst flächig an die Innenkontur der Lagerschalen anschmiegen können.

Die radiale Abstützung der Lageraußenschale an dem Lagerinnenteil erfolgt allerdings nicht ausschließlich über die Ringwülste, sondern zu wesentlichen Teilen auch über einen dem Mittelsteg radial gegenüberliegenden Sattelabschnitt, welcher in der Einbaulage von dem Mittelsteg komprimiert wird. Dieser Sattelabschnitt verbindet die beiden Ringwülste miteinander. In radialer Richtung ist der Sattelabschnitt etwa halb so hoch wie die Ringwülste.

Die Erfindung wird nachfolgend anhand des in der schematischen Zeichnung dargestellten Ausführungsbeispiels erläutert.

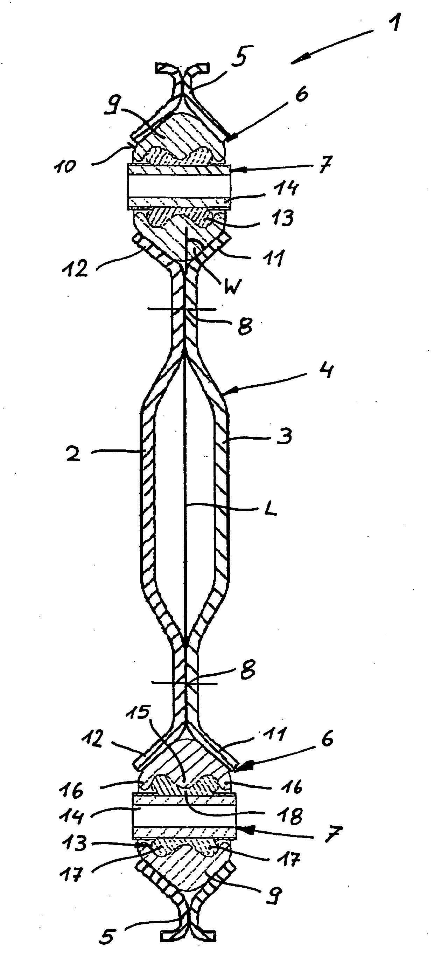

Die Figur zeigt eine Lenkeranordnung 1 mit einem aus einer Oberschale 2 und aus einer Unterschale 3 zusammengesetzten Lenker 4. Der Lenker 4 besitzt in seinen Endbereichen 5 jeweils einen Durchzug 6 zur Aufnahme eines Gummi-Metall-Lagers 7. Es ist zu erkennen, dass Oberschale 2 und Unterschale 3 Bereiche aufweisen, in denen sie im Abstand zueinander verlaufen. Benachbart den Endbereichen 5 berühren sich Oberschale 2 und Unterschale 3. Verbindungsstellen 8 in Form von Schweißpunkten sind beispielhaft eingezeichnet. In jedem Fall ist die Oberschale 2 fest mit der Unterschale 3 verbunden, so dass das Gummi-Metall-Lager 7 vorgespannt zwischen der Oberschale 2 und der Unterschale 3 gehalten ist.

Wesentlich bei der erfindungsgemäßen Lenkeranordnung ist, dass die Oberschale 2 und die Unterschale 3 im Bereich der Durchzüge 6 in entgegengesetzte Richtungen konisch ausgestellt sind, so dass sich ein doppelkonisch gestalteter Ringraum zur Aufnahme einer Lageraußenschale 9 ergibt. Die Außenkontur 10 der aus Kunststoff hergestellten Lageraußenschale 9 ist ebenfalls doppelkonisch gestaltet. In diesem Ausführungsbeispiel beträgt der Konuswinkel zwischen der Lenkerlängsachse L und den Ausstellungen 11, 12 der Durchzüge 6 45°. Der Konuswinkel W entspricht ebenfalls dem Konuswinkel der doppelkonischen Außenkontur, so dass sich die Lageraußenschale 9 flächig an den Ausstellungen 11, 12 abstützt.

Das Gummi-Metall-Lager 7 umfasst eine Elastomerfeder 13, die mit dem hülsenförmigen Lagerinnenteil 14 aus Metall fest haftend verbunden ist, insbesondere durch Vulkanisation. Die Lageraußenschale 9 besitzt im axialen Längsschnitt eine gewellte Innenkontur mit einem radial nach innen weisenden Mittelsteg 15 und mit radial nach innen weisenden Randstegen 16. Die Elastomerfeder 13 besitzt zwei im Abstand zueinander verlaufende Ringwülste 17, welche in der Einbaulage unter radialer Vorspannung durch die Lageraußenschale 9 zwischen dem Mittelsteg 15 und die Randstege 16 greifen. Der Mittelsteg 15 ist breiter konfiguriert als der Abstand zwischen den Ringwülsten 17, so dass der Mittelsteg 15 die Ringwülste 17 in der Einbaulage in Axialrichtung auseinander drängt. Die Übergänge zwischen dem Mittelsteg 15 und den Randstegen 16 sind durch groß gewählte Radien gerundet ausgeführt. Ebenso wie die Lageraußenschale 9 eine stark profilierte Innenkontur aufweist, ist auch die Außenkontur der Elastomerfeder 13 stark profiliert und insgesamt gerundet. Die Ringwülste 17 befinden sich im gleichen Abstand von dem Mittelsteg 15, wobei sie an einen Sattelabschnitt 18 der Elastomerfeder 13 grenzen. Durch den Mittelsteg 15 entstehen zwei nutförmige Bereiche innerhalb der Lageraußenschale 9, die als Druckkammern bezeichnet werden können. Diese Druckkammern sind nahezu vollständig mit dem Material der Elastomerfeder 13 gefüllt, lediglich im Bereich zu den Randstegen 16 hin bleibt etwas Freiraum. Die Randstege 16 befinden sich mit ihren freien Enden in radialem Abstand zu dem Lagerinnenteil 14 bzw. dem den Lagerinnenteil 14 umgebenden Bereich der Elastomerfeder 13. Die Eigenschaften des Gummi-Metall-Lagers 7 hängen signifikant von der gewählten Geometrie der Lageraußenschale 9 und der gewählten Geometrie der Elastomerfeder 13 ab. Darüber hinaus spielt natürlich auch die Werkstoffwahl der Elastomerfeder 13 eine entscheidende Rolle. Das dargestellte Ausführungsbeispiel zeigt lediglich eine vorteilhafte Variante einer Gummi-Metall-Lagerung in Kombination mit einer Lageranordnung, wobei die exakte Konturierung der Lageraußenschale 9 sowie der Elastomerfeder 13 vom jeweiligen Anwendungsfall abhängig zu machen sind.

### Bezugszeichen:

- 1 -: Lenkeranordnung
- 2 -: Oberschale
- 3 -: Unterschale
- 4 -: Lenker
- 5 -: Endbereich
- 6 -: Durchzug
- 7 -: Gummi-Metall-Lager
- 8 -: Verbindungsstelle
- 9 -: Lageraußenschale
- 10 -: Außenkontur
- 11 -: Ausstellung
- 12 -: Ausstellung
- 13 -: Elastomerfeder
- 14 -: Lagerinnenteil
- 15 -: Mittelsteg
- 16 -: Randsteg
- 17 -: Ringwulst
- 18 -: Sattelabschnitt

- L -: Lenkerlängsachse
- W -: Konuswinkel

## Patentansprüche

1. Lenkeranordnung (1) mit einem aus einer Oberschale (2) und aus einer Unterschale (3) zusammengesetzten Lenker (4), welcher in seinen Endbereichen (5) jeweils einen Durchzug (6) zur Aufnahme eines Gummi-Metall-Lagers (7) aufweist, **dadurch gekennzeichnet, dass** die Oberschale (2) und die Unterschale (3) im Bereich der Durchzüge (6) in entgegengesetzte Richtungen konisch ausgestellt sind, wobei in dem derart doppelkonisch gestalteten Ringraum eine Lageraußenschale (9) mit doppelkonischer Außenkontur (10) unverlierbar gehalten ist.

2. Lenkeranordnung nach Anspruch 1, **dadurch gekennzeichnet, dass** der zwischen der Lenkerlängsachse (L) und den Ausstellungen (10, 11) im Bereich der Durchzüge (6) gemessene jeweilige Konuswinkel (W) der Oberschale (2) und der Unterschale (3) in einem Bereich von 30° bis 60° liegt.

3. Lenkeranordnung nach Anspruch 2, **dadurch gekennzeichnet, dass** der Konuswinkel (W) der doppelkonischen Außenkontur (10) an die Konuswinkel (W) der Oberschale (2) und der Unterschale (3) angepasst ist.

4. Lenkeranordnung nach einem der Ansprüche 1 bis 3, **dadurch gekennzeichnet, dass** eine Elastomerfeder (13) des Gummi-Metall-Lagers (7) mit dem Lagerinnenteil (14) fest haftend verbunden ist, wobei die Lageraußenschale (9) im axialen Längsschnitt eine gewellte Innenkontur mit einem radial nach innen weisenden Mittelsteg (15) und mit radial nach innen weisenden Randstegen (16) aufweist, wobei die Elastomerfeder (13) zwei im Abstand zueinander verlaufende Ringwülste (17) aufweist, welche in der Einbaulage unter radialer Vorspannung durch die Lageraußenschale (9) zwischen den Mittelsteg (15) und die Randstege (16) greifen, wobei der Mittelsteg (15) die Ringwülste (17) in der Einbaulage in Axialrichtung auseinander drängt.

5. Lenkeranordnung nach Anspruch 4, **dadurch gekennzeichnet, dass** zwischen den Ringwülsten (17) ein dem Mittelsteg (15) radial gegenüberliegender Sattelabschnitt (18) ausgebildet ist, welcher in der Einbaulage von dem Mittelsteg (15) komprimiert wird.

6. Lenkeranordnung nach einem der Ansprüche 1 bis 5, **dadurch gekennzeichnet, dass** die Ringwülste (17) in der Einbaulage durch Verdrängung an den Randstegen (16) zur Anlage gelangen.

## Claims

1. Suspension arm arrangement (1) having a suspension arm (4) which is composed of an upper shell (2) and of a lower shell (3) and has, in each of its end regions (5), a rim hole (6) for receiving a rubber-metal mount (7), **characterized in that** the upper shell (2) and the lower shell (3) protrude conically in opposite directions in the region of the rim holes (6), wherein an outer mount shell (9) with a biconical outer contour (10) is captively held in the annular chamber configured to be biconical in this way.

2. Suspension arm arrangement according to Claim 1, **characterized in that** the respective cone angle (W) of the upper shell (2) and of the lower shell (3) measured between the longitudinal axis (L) of the suspension arm and the protuberances (10, 11) in the region of the rim holes (6) is in a range of from 30° to 60°.

3. Suspension arm arrangement according to Claim 2, **characterized in that** the cone angle (W) of the biconical outer contour (10) is matched to the cone angle (W) of the upper shell (2) and of the lower shell (3).

4. Suspension arm arrangement according to one of Claims 1 to 3, **characterized in that** an elastomer spring (13) of the rubber-metal mount (7) is firmly bonded to the inner mount part (14), wherein the outer mount shell (9), in axial longitudinal section, has a corrugated inner contour with a radially inwardly pointing central web (15) and with radially inwardly pointing edge webs (16), wherein the elastomer spring (13) has two annular beads (17) which run at a distance from one another and, in the installed position, engage with radial prestress through the outer mount shell (9) between the central web (15) and the edge webs (16), wherein the central web (15) forces the annular beads (17) apart in the axial direction in the installed position.

5. Suspension arm arrangement according to Claim 4, **characterized in that** a saddle section (18) which is situated radially opposite the central web (15) and is compressed by the central web (15) in the installed position is formed between the annular beads (17).

6. Suspension arm arrangement according to one of Claims 1 to 5, **characterized in that** the annular beads (17) come to bear against the edge webs (16) in the installed position by being displaced.

## Revendications

1. Arrangement de bras de suspension (1), comprenant un bras (4) composé d'une coque supérieure (2) et d'une coque inférieure (3) et qui comporte respectivement dans ses zones terminales (5) une traversée (6) pour loger un palier (7) caoutchouc/métal, **caractérisé en ce que** la coque supérieure (2) et la coque inférieure (3) et sont déformées vers l'extérieur sous forme conique dans des directions opposées dans la zone des traversées (6), de sorte que dans l'espace annulaire ainsi réalisé en forme de double cône, une coupelle extérieure de palier (9) avec contour extérieur en forme de double cône (10) est maintenue prisonnière.

2. Arrangement de bras de direction selon la revendication 1, **caractérisé en ce que** l'angle conique respectif (W), mesuré entre l'axe longitudinal du bras (L) et les déformations vers l'extérieur (10, 11) dans la zone des traversées (6), de la coque supérieure (2) et de la coque inférieure (3), est compris dans une plage de 30° à 60°.

3. Arrangement de bras de direction selon la revendication 2, **caractérisé en ce que** l'angle conique (W) du contour extérieur (10) en forme de double cône est adapté à l'angle conique (W) de la coque supérieure (2) et de la coque inférieure (3).

4. Arrangement de bras de direction selon l'une des revendications 1 à 3, **caractérisé en ce qu'**un ressort élastomère (13) du palier (7) caoutchouc/métal est relié en adhésion ferme avec la partie intérieure (14) du palier, la coupelle extérieure (9) du palier présentant en coupe longitudinale axiale un contour intérieur ondulé avec une protrusion médiane (15) dirigée radialement vers l'intérieur et avec des protrusions de bordure (16) dirigées radialement vers l'intérieur, le ressort élastomère (13) présentant de bourrelets annulaires (17) qui s'étendent à distance l'un de l'autre et qui, dans la position de montage, s'engagent sous précontrainte radiale à travers la coupelle extérieure de palier (9) entre la barrette médiane (15) et les barrettes de bordure (16), la protrusion médiane (15) forçant les bourrelets annulaires (17) en écartement en direction axiale dans la position de montage.

5. Arrangement de bras de direction selon la revendication 4, **caractérisé en ce qu'**un tronçon en forme de selle (18) radialement opposé à la protrusion médiane (15) est réalisé entre les bourrelets annulaires (17), ledit tronçon étant comprimé par la protrusion médiane (15) dans la position de montage.

6. Arrangement de bras de direction selon l'une des revendications 1 à 5, **caractérisé en ce que**, dans la position de montage, les bourrelets annulaires (17) viennent en contact contre les protrusions de bordure (16) parpoussée.
